# EUROPEAN PATENT APPLICATION

(11) **EP 4 570 830 A1**
(43) Date of publication of application: **18.06.2025**
(21) Application number: 23307199.2
(22) Date of filing: 13.12.2023
(51) Int. Cl.: C08F 14/22, C08F 293/00, C08J 5/18, C08J 5/22, C09D 127/16, C09D 153/00

(54) **SYNTHESIS OF SURFACTANT-FREE PVDF LATEXES BY IODINE TRANSFER MEDIATED EMULSION POLYMERIZATION**

(71) Applicant: ARKEMA FRANCE, 92800 Puteaux (FR); Université Claude Bernard Lyon 1 (UCBL), 69100 Villeurbanne (FR); École Superieure de Chimie, Physique, Electronique De Lyon - CPE Lyon, 69616 Vilerbanne Cedex (FR); Centre National de la Recherche Scientifique, 75016 Paris (FR)
(72) Inventor: EID, Nadim, PIERRE-BENITE (FR); DEVISME, Samuel, COLOMBES (FR); BONNET, Anthony, COLOMBES (FR); FEVRIER, Thibaut, COLOMBES (FR); LANSALOT, Muriel, GENAS (FR); D'AGOSTO, Franck, GENAS (FR)
(74) Representative: Arkema Patent

(57) **Abstract**

The present invention relates to a process for producing a stable PVDF latex by emulsion polymerization in the absence of fluorinated surfactant and in the presence of a hydrophilic (2-iodopropionate)-functionalized poly(ethylene glycol).

## Description

### FIELD OF THE INVENTION

The present invention relates to a process for producing a stable PVDF latex by emulsion polymerization in the absence of fluorinated surfactant and in the presence of a hydrophilic functionalized poly(ethylene glycol)

### TECHNICAL BACKGROUND

Poly(vinylidene fluoride) (PVDF) is a fluoropolymer valued for its excellent mechanical and thermal properties, in addition to its outstanding chemical inertness. It has been used in high performance applications like lithium-ion batteries, coatings or water treatment. PVDF is synthesized *via* aqueous free-radical emulsion or suspension polymerization of vinylidene fluoride (VDF). As the VDF monomer is either a gas or a supercritical fluid depending on the polymerization process, VDF emulsion polymerization mechanism is more complex than most emulsion polymerization processes. However, the global mechanism of VDF emulsion polymerization obeys to standard emulsion polymerization process, and the recipe includes water, VDF, a surfactant, a water-soluble initiator and optionally some additives (chain transfer agent, buffer, anti-fouling agent). The polymerization takes place in a high-pressure reactor, where VDF is initially present in both the gas and aqueous phases, and in the PVDF particles formed during the polymerization.

To achieve a stable dispersion of PVDF particles and good polymer properties, a suitable surfactant must be used. Thus, different types of surfactants/stabilization techniques have been used industrially and/or depicted in the literature for VDF emulsion polymerization, such as molecular fluorinated surfactants, molecular non-fluorinated surfactants, or "surfactant-free" techniques.

The use of polymeric surfactants is well-known in emulsion and dispersion polymerization. Surfactant-free emulsion polymerization of VDF mediated by a poly(ethylene glycol)-based hydrophilic macromolecular chain transfer agent has previously been described, based on the Reversible Addition-Fragmentation chain Transfer (RAFT) technique, for example in document WO 2019/063445. In this case, the hydrophilic PEG block carries a xanthate chain end involved in the polymerization of VDF. Self-stabilized PVDF particles can be obtained without adding surfactant, with a particle size significantly smaller with PEG-xanthate than with commercial non-modified PEG-OH, thus showing the beneficial use of a reactive macromolecule.

Iodine transfer polymerization (ITP) is a CRP technique that has been widely used to control VDF polymerization. Thus, perfluoroalkyl iodides are good chain-transfer agents for solution or emulsion CRP of VDF, as described by D. Valade et al. in Macromolecules 2006, 39, 8639-8651.

Document US 2020/0017620 teaches the use of reactive fluoro-oligomeric reactive dispersants comprising at least one iodine or bromine atom for the synthesis of fluoropolymer dispersions such as PVDF dispersions. For example, a I-(VDF/SFVE(SO₃Na))-I dispersant was synthesized and used for emulsion polymerization of VDF. The analysis of the water phase of the obtained latex indicates the absence of dispersant, thus conveying evidence for the dispersant having reacted and being incorporated in the PVDF particles.

It has now been found that stabilized PVDF particles can be obtained by a process combining the advantages of emulsion polymerization with those of controlled radical polymerization (CRP) using hydrophilic macro-chain transfer agents, without adding surfactant, especially without adding any low molar mass fluorosurfactant. The process of the invention also allows to produce small particle size emulsion permitting the PVDF latex to be stable during storage and enabling film formation.

The hydrophilic macro-chain transfer agents used in the present invention, synthesized and used for the first time to mediate emulsion polymerization of VDF, are based on a hydrophilic macro-chain transfer agent carrying an iodo end-group.

### SUMMARY OF THE INVENTION

According to a first aspect, the invention concerns a process for producing a stable vinylidene fluoride polymer latex by emulsion polymerization in the absence of fluorinated surfactant, said process comprising the steps of:
a. providing a hydrophilic poly(ethylene glycol) terminated by a (2-iodopropionate) chain-end (PEG-I), forming a first hydrophilic block carrying a reactive chain end,
b. emulsion polymerization of VDF mediated by PEG-I.

The invention also relates to an aqueous dispersion comprising PVDF polymer particles composed of vinylidene fluoride-(VDF) monomer, alone or in combination with at least one other ethylenically unsaturated comonomer, said PVDF particles having an average particle size from 20 to 300 nm, said PVDF dispersion having a solid content of 1 to 60, preferably of 15 to 45 weight percent, and being free of low molar mass fluorinated surfactant.

The invention also relates to the applications of the aqueous PVDF dispersion for the preparation of membranes, coatings, films, conductive polymers for batteries and cathode binders.

The present invention makes it possible to overcome the disadvantages of the state of the art. It more particularly provides a process for the synthesis of a fluorosurfactant-free latex using non fluorinated polymeric stabilizer. The emulsion polymerization of VDF is performed in the presence of a specific hydrophilic polymer chains, used in low concentration- The PVDF latexes are formed of small stable particles.

The stabilizer is composed of a hydrophilic block. The macro-chain transfer agent may participate in the polymerization and provide *in situ* latex stability. That also brings hydrophilic moieties to the PVDF chains which give additional and valuable end use properties in membranes, coatings and films, conductive polymers for batteries, cathode binder and so on.

### DESCRIPTION OF EMBODIMENTS OF THE INVENTION

The invention is now described in detail.

The present invention describes a way to prepare poly(vinylidene fluoride) latexes, emulsion polymerization without adding any fluorosurfactant.

According to one embodiment, this process requires the synthesis of hydrophilic polymer chains terminated by a (2-iodopropionate) chain-end that can play the role of a macromolecular stabilizer.

According to a first aspect, the invention provides a process for producing a stable PVDF latex by emulsion polymerization in the absence of low molar mass fluorinated surfactant.

The term "vinylidene fluoride polymer" used herein (or "PVDF") includes both normally solid, homopolymers and copolymers within its meaning. Such copolymers include those containing at least 50 mole percent of vinylidene fluoride copolymerized with at least one comonomer selected from the group consisting of tetrafluoroethylene, trifluoroethylene, chlorotrifluoroethylene, hexafluoropropene, vinyl fluoride, pentafluoropropene, perfluoromethyl vinyl ether, perfluoropropyl vinyl ether and any other monomer that would readily copolymerize with vinylidene fluoride. Terpolymers of vinylidene fluoride, hexafluoropropene and tetrafluoroethylene and terpolymers of vinylidene fluoride, trifluoroethylene and tetrafluoroethylene are also representatives of the class of vinylidene fluoride copolymers that can be prepared by the process embodied herein.

The unfluorinated monomers useful in the aqueous-based polymerization of the invention are ethylenically unsaturated monomers chosen from: (meth)acrylic acid and (meth)acrylic esters such as alkyl(meth)acrylates, vinyl esters such as vinyl acetate, vinyl propionate, vinyl butyrate, vinyl benzoate, maleic esters such as dimethyl maleate, diethyl maleate, di-n-propyl maleate, diisopropyl maleate, di-2-methoxyethyl maleate, fumaric esters such as dimethyl fumarate, diethyl fumarate, di-n-propyl fumarate, diisopropyl fumarate, styrene, vinyltoluene, alpha-methylstyrene and acrylonitrile, anhydrides, vinyl esters, alpha-olefins, substituted or unsubstituted mono and dialkyl esters of unsaturated dicarboxylic acids, vinyl aromatics, and cyclic monomers.

Although the process of the invention will be generally illustrated with respect to the polymerization of vinylidene fluoride homopolymer, one of skill in the art will recognize that analogous polymerization techniques can be applied to the preparation of copolymers of vinylidene fluoride with fluorinated or unfluorinated co-reactive monomers.

The polymers are conveniently made by an emulsion polymerization process, but could also be synthesized by a suspension, solution, or supercritical CO₂ process.

The mixture of reagents is stirred and deoxygenated. A predetermined amount of chain transfer agent, CTA, is then introduced into the reactor, though no CTA might be used in the present process. The reactor temperature is raised to the desired level and vinylidene fluoride fed into the reactor. Once the initial charge of vinylidene fluoride is introduced and the pressure in the reactor has reached the desired level, at least one radical initiator is added to start and maintain the polymerization reaction. The vinylidene fluoride is continuously fed optionally along with additional initiator to maintain the desired pressure. The temperature of the reaction can vary depending on the characteristics of the initiator used and one of skill in the art will know how to do so. Typically, the reactor temperature will be from about 30° to 120°C, preferably from about 60° to 110°C. The polymerization pressure may vary, typically within the range of from 200 to 10000 kPa. Once the desired amount of polymer conversion has been reached in the reactor, the monomer feed will be stopped, but initiator is optionally added to consume residual monomer. Residual gases (containing unreacted monomers) are then vented, and the latex recovered from the reactor. The polymer may then be isolated from the latex by standard methods, such as freeze thaw, spray-dry, freeze-dry, or high shear coagulation separation.

The term "initiator" and the expressions "radical initiator" and "free radical initiator" refer to a chemical that is capable of providing a source of free radicals, either induced spontaneously, or by exposure to heat or light. Examples of initiators include peroxides, peroxydicarbonates and azo compounds. The term expression also includes redox systems useful in providing a source of free radicals.

The radical initiator is added to the reaction mixture in an amount sufficient to initiate and maintain the polymerization reaction at a desired reaction rate. The order of addition may vary according to the desired process and latex emulsion characteristics.

The radical initiator may comprise a persulfate salt, such as sodium persulfate, potassium persulfate, or ammonium persulfate. The amount of persulfate salt added to the reaction mixture (based upon the total weight of monomer added to the reaction mixture) is from about 0.005 to about 4.0 weight percent.

The radical initiator may comprise an organic peroxide such as an alkyl, dialkyl, or diacyl peroxide, peroxydicarbonates, and peroxy esters in an amount from about 0.5 to about 2.5 weight percent on total monomer.

Chain-transfer agents are optionally added to the polymerization to regulate the molecular weight of the product. They may be added to a polymerization in a single portion at the beginning of the reaction, or incrementally or continuously throughout the reaction. The amount and mode of addition of chain-transfer agent depend on the activity of the particular chain-transfer agent employed, and on the desired molecular weight of the polymer product. When added, the amount of chain-transfer is preferably from about 0.05 to about 5 weight percent, more preferably from about 0.1 to about 2 weight percent based on the total weight of monomer added to the reaction mixture.

Examples of chain transfer agents useful in the present invention include but are not limited to oxygenated compounds such as alcohols, carbonates, ketones, esters, and ethers; halocarbons and hydrohalocarbons, such as chlorocarbons, hydrochlorocarbons, chlorofluorocarbons and hydrochlorofluorocarbons; ethane and propane.

The optional addition of a paraffin wax or hydrocarbon oil to the reaction serves as an antifouling agent to minimize or prevent polymer adhesions to the reactor components. Any long chain saturated hydrocarbon wax or oil can perform this function. The amount of oil or wax added to the reactor is an amount which serves to minimize the formation of polymer adhesions to the reactor components. The amount is generally proportional to the interior surface area of the reactor and may vary from about 1 to about 40 mg per square centimeter of reactor interior surface area. The amount of paraffin wax or hydrocarbon oil is preferably about 5 mg/cm² of the reactor interior surface area.

According to a second aspect, the invention relates to aqueous stable PVDF dispersion comprising PVDF particles, residues of initiator, alone or in combination with at least one other ethylenically unsaturated comonomer, said PVDF particles having an average particle size from 20 to 300 nm, as measured by dynamic light scattering, said PVDF dispersion having a solid content of 1 to 60, preferably of 15 to 45 weight percent (as measured by gravimetry) and being free of low molar mass fluorinated surfactant. The weight ratio PEG-I/PVDF varies from 0.05 to 10 (in %), preferably from 0.2 to 5 (in %), the amount of PVDF being determined from the solids content minus all the other species including initiator, poly(ethylene glycol)-I hydrophilic macro-agent and buffer.

The PVDF dispersions have good latex stability and shelf-life, and a good quality of film formation. Additionally, the particle size of dispersion being small, it is advantageous for many direct applications of fluoropolymer in a latex form, such as manufacture of membranes, coatings and films.

### EXAMPLES

The following examples illustrate the invention without limiting it.

### 1) Reagents

The following reagents were used in the examples:
Vinylidene fluoride (VDF) and potassium 3,3,4,4,5,5,6,6,7,7,8,8,8-tridecafluoro-1-octanesulphonate (Capstone^{®} FS-17, FS) were kindly supplied by Arkema (Pierre-Benite, France). Potassium persulfate (KPS, Aldrich, 99% ) sodium acetate (Aldrich, 99%), poly(ethylene glycol) methyl ether (PEG-OH, 2000 g mol-1, Aldrich), sodium iodide (Aldrich, > 99.5%), triethylamine (Et3N, Aldrich, > 99%), acetone (Aldrich, > 99.5%), dichloromethane (Aldrich, > 99.5%), sodium thiosulfate (Na2S2O3, Aldrich, 99%), sodium bicarbonate (NaHCO3, Aldrich, > 99%), ammonium chloride (Aldrich, > 99.5%), magnesium sulfate (MgSO4, Aldrich, > 99.5%), tetrahydrofuran (THF, Fisher, HPLC grade), dimethyl sulfoxide (DMSO, Fischer, HPLC grade), 2-bromopropionyl bromide (97%, Aldrich), heptane (Aldrich, 99 %), diethyl ether (Aldrich, 99 %) were used as received.

Water was deionized before use (Purelab Classic UV, Elga LabWater).

### 2) Characterization techniques

Nuclear Magnetic Resonance (NMR) was used to verify the structure of the poly(ethylene glycol) terminated by a (2-iodopropionate) and to determine the microstructure of the obtained PVDF latex. NMR spectra were recorded on a Bruker Avance 400 spectrometer (400 MHz for 1H and 376 MHz for 19F) at 25 °C using DMSO-d6, chloroform-d or d2O as solvents. The samples were diluted in the solvent of analysis at a concentration of about 30 mg mL⁻¹. NMR spectra were recorded with a 5 mm BBFO + probe with a z-gradient coil.

Size Exclusion Chromatography (SEC) in THF was used to determine the molar masses of the poly(ethylene glycol) terminated by a (2-iodopropionate). SEC analyses were performed using a Viscotek system (Malvern Instruments) equipped with a guard column and three Polymer Standard Service columns (SDVB, 5 µm, 300 × 7.5 mm) and including a differential refractive index detector (RI), a four-capillary differential viscometer and UV detector. The measurements were done at 35 °C with a flow rate of 1 mL min⁻¹. Sample concentration was between 3 and 5 mg L⁻¹ after filtration through 0.45 µm pore membranes. The molar mass distributions were obtained using a calibration curve based on poly(styrene) standards from 470 to 270 000 g mol⁻¹. The Omnisec software was used for data acquisition and analysis.

SEC in DMSO was used to determine the molar masses of PVDF. SEC analyses were performed using a Agilent 1260 Infinity system equipped with three porous columns - one column of 30 Å and two columns of 1000 Å of polyester copolymer (Gram columns, PSS) and including a differential refractive index detector (RI), and a UV detector. The mobile phase consists in a mixture of DMSO with sodium nitrate (NaNO3, 0.01 mol L⁻¹) previously filtered, at a flow rate of 9 mL min⁻¹. To prepare the sample, the product to analyze is dissolved in the same mixture of DMSO and NaNO₃ than the mobile phase at a concentration of around 5 mg mL⁻¹. When the samples were completely dissolved, solutions were filtered through a 0.45 µm nylon membrane and injected. The molar mass distributions were obtained using a calibration curve based on poly(methyl methacrylate) (PMMA) standards from 831 to 1430000 g mol⁻¹. The Agilent GPC/SEC solfware was used for data acquisition and analysis.

The solids content of each PVDF latex was measured by thermogravimetry. The particle size of the latex was obtained by Dynamic light scattering (DLS). The intensity-weighted mean diameter of the latex particles (*D_{z}*, nm, corresponding to the hydrodynamic particle diameter) and the dispersity factor (PdI) were measured at 25 °C with an angle of 173° using a Zetasizer Nano Series (Nano ZS) from Malvern Instruments.

### Example 1: synthesis of the poly(ethylene glycol) terminated by a (2-iodopropionate) (PEG-I)

PEG-I was synthesized by a two-step reaction from a poly(ethylene glycol) methyl ether (PEG-OH) precursor in our laboratory. The first step consists in the synthesis of a poly(ethylene glycol) terminated (2-bromopropionate) (PEG-Br). Poly(ethylene glycol) methyl ether (PEG-OH, 2000 g mol⁻¹, 40.1 g, 2.0 × 10⁻² mol) and triethylamine (8 mL, 5.9 × 10⁻² mol) were dissolved in dichloromethane (100 mL) in a three-neck round bottom flask. The mixture was cooled by immersing in an ice bath. 2-bromopropionyl bromide (5 mL, 4.8 × 10⁻² mol) was added dropwise. After maintaining at 0 °C for an additional half an hour, the mixture was stirred at room temperature overnight. The suspension was filtered off. The filtrate was washed with a saturated solution of NH₄Cl (2 × 50 mL), a saturated solution of NaHCO₃ (2 × 50 mL), water (2 × 50 mL) and a saturated solution of brine (2 × 50 mL). The organic layer was eventually dried over anhydrous MgSO₄, filtered, and the solvent was evaporated under vacuum. The obtained yellowish oil was crashed dropwise in diethyl ether. The powder was recovered by filtration and dried over reduced pressure.

To a solution of PEG-Br (29.50 g, 1.3 × 10⁻² mol) in dry acetone (200 mL) was added a solution of NaI (19.70 g, 1.33 × 10⁻¹ mol) in dry acetone (100 mL). The mixture was stirred at room temperature two hours. The precipitate was filtered off and washed with dry acetone (40 mL). The solvent was evaporated from the filtrate under vacuum. The obtained product was then dissolved in dichloromethane (200 mL) and was washed with a saturated solution of Na₂S2O₃ (2 × 70 mL) and water (2 x 70 mL). The organic layer was eventually dried over anhydrous MgSO₄, filtered, and the solvent was evaporated under vacuum. The yellow oil obtained was crashed dropwise in diethyl ether (300 mL). The powder was recovered by filtration, dried over reduced pressure, washed with diethyl ether (2 × 100 mL) and heptane (2 × 100 mL) and dried over reduced pressure to obtain a yellow powder (17.2 g, 59 %).

**¹H NMR** (400 MHz, DMSO) δ (ppm) = 4.64 (q, *J* = 6.0 Hz, 1H, I-CH-CH₃), 4.19 (t, *J* = 4.8 Hz, 2H, CH₂-OC=O), 3.85 - 3.38 (m, 185H, CH₂ PEG), 3.24 (s, 3H, CH₃-O), 1.84 (d, *J* = 7.0 Hz, 3H, I-CH-CH₃).

*M*ₙ and *Ð* were determined after methylation by SEC in THF. (*M*ₙ = 3000 g mol⁻¹, D = 1.06).

### Example 2-6 : VDF emulsion polymerization in the presence of PEG-I

### Example 2: polymerization conducted in the presence of PEG-I (2 h 30 of reaction)

VDF emulsion polymerization was conducted in a 200 mL Parr autoclave equipped with a mechanical stirring system, inlet and outlet valves, a thermometer and a pressure sensor. A 100 mL solution of 0.20 g of KPS, 0.12 g of sodium acetate and 0.08 g of PEG-I was introduced in the reactor. The medium was deoxygenated under argon for 30 min. VDF was introduced in the reactor under stirring (500 rpm) until the targeted pressure of 3.5 MPa. Immediately after, the medium was heated at a set point temperature of 80 °C. The injection port stayed open until the end of the reaction, to add continuously VDF throughout the reaction (semi-batch mode). To stop the polymerization after 2 h 30 of reaction, the reactor was cooled down, the agitation speed was slowed down, unreacted monomer was progressively released, and the latex was finally collected.

### Example 3 follows the same procedure as described in Example 1 but with a reaction time of 4 h instead of 2 h 30.

The characteristics of these experiments are summarized in Table 1.
^{a} *D_{z}*: particle size measured by dynamic light scattering (DLS)
^{b} PdI: polydispersity index measured by dynamic light scattering (DLS)
^{c} *M*ₙ is the number-average molar mass and D is the dispersity. They are determined by size exclusion chromatography (SEC) in dimethyl sulfoxide (DMSO) using a calibration curve based on poly(methyl methacrylate) (PMMA) standards

**Table 1**

| **Ex** | **Reaction time** | **Solids content (%)** | **D*_{z}*^{a} (nm)** | **PdI^{b}** | **Nₚ (10¹⁶ L⁻¹ latex)** | ***M*ₙ^{c} (g mol⁻¹)** | ***Ð^{c}*** |
|---|---|---|---|---|---|---|---|
| 2 | 2 h 30 | 11.1 | 83 | 0.02 | 22 | 41000 | 5.7 |
| 3 | 4 h | 18.5 | 128 | 0.03 | 11 | 51000 | 6.8 |

As it can be observed in Table 1, stable latex with small particles were obtained for both reaction times. In both cases, the number of particles is high, evidencing a very good stabilization of the particles.

### Examples 4-6: polymerization conducted in the presence of different amounts of PEG-I.

Example 4 was carried out using 100 mL of water, 0.13 g of PEG-I, 0.20 g of KPS, 0.12 g of sodium acetate, corresponding to a KPS/PEG-I weight ratio of 1.5.

Example 5 follows the same procedure as described in Example 4 but using 0.10 g of PEG-I, corresponding to a KPS/PEG-I weight ratio of 2.0.

Example 6 follows the same procedure as described in Example 4 but using 0.05 g of PEG-I, corresponding to a KPS/PEG-I weight ratio of 4.0.

The characteristics of these experiments are summarized in Table 2. Example 3 was added to Table 2 as it can be compared with Examples 4 to 6.

**Table 2**

| **Ex** | **KPS/PEG-I** | **Solids content (%)** | ***D_{Z}* (nm)** | **PdI** | **Nₚ (10¹⁶ L⁻¹ latex)** | ***M*ₙ (g mol⁻¹)** | ***Ð*** |
|---|---|---|---|---|---|---|---|
| 4 | 1.5 | 6.9 | 47 | 0.17 | 72 | 13000 | 4.6 |
| 5 | 2.0 | 8.3 | 80 | 0.06 | 18 | 28000 | 5.6 |
| 3 | 2.5 | 18.5 | 128 | 0.03 | 11 | 51000 | 6.8 |
| 6 | 4.0 | 19.5 | 179 | 0.01 | 4 | 78000 | 7.7 |

The solids content decreases with the KPS/PEG-I ratio due to the effect of degradative chain-transfer reactions when increasing the quantity of PEG-I. The number of particles increases with the quantity of PEG-I, showing the beneficial effect of PEG-I on particle stabilization.

### Comparative examples

### Examples 2-10: VDF emulsion polymerization in the presence of different stabilizers

Examples 2 and 3 (Table 3) are examples of VDF emulsion polymerization mediated by PEG-I according to the invention. The PVDF latex obtained in the presence of PEG-I have been compared to PVDF latexes obtained using other well-known stabilizers (Table 3).
(a) Reactions conditions: 35 bar, 80 °C, 0.20 g of KPS, 0.12 g of sodium acetate, 0.08 g of stabilizer, 100 mL of water
(b) Reactions conditions: 35 bar, 80 °C, 0.20 g of KPS, 0.12 g of sodium acetate, 100 mL of water
(c) Reaction conditions: 35 bar, 80 °C, 0.0088 g of KPS, 0.0056 g of sodium acetate, 0.15 g of molecular surfactant Capstone^{®} FS-17, 100 mL of water
(d) PEG-OH (*M*ₙ ≈ 2000 g mol⁻¹). Stabilizing properties for PVDF disclosed in WO2019063445.

**Table 3**

| **Ex** | **Stabilizer** | **Reaction time** | **Solids content (%)** | ***D*_{z} (nm)** | **PdI** | ***M*ₙ (g mol^{- 1})** | ***Ð*** |
|---|---|---|---|---|---|---|---|
| 2 | PEG-I (a) | 2h30 | 11.1 | 83 | 0.02 | 41000 | 5.7 |
| 3 | PEG-I (a) | 4h | 18.5 | 128 | 0.03 | 51000 | 6.8 |
| 7 | No stabilizer (b) | 1 h | 15.3 | 257 | 0.01 | 58000 | 5.0 |
| 8 | Capstone^{®} FS-17 (c) | 1 h 30 | 15.6 | 180 | 0.02 | 150000 | 3.4 |
| 9 | PEG-OH (a), (d) | 1 h | 9.5 | 206 | 0.02 | 45000 | 3.6 |
| 10 | PEG-OH (a), (d) | 2h30 | 20.2 | 220 | 0.02 | 57000 | 5.4 |

As shown in Table 3, the particles obtained in the presence of PEG-I (Ex 2 and 3) are much smaller than those obtained: in the absence of stabilizer (Ex 7), in the presence of Capstone^{®} FS-17 (Ex 8) and of PEG-OH (Ex 9), although the solids content of the latex with PEG-I is the highest. This shows a better stabilization of PVDF particles in the presence of PEG-I. This is confirmed when comparing Ex 2 with Ex 9 or Ex 3 with Ex 10: for rather similar solids contents, the particle size is smaller in the presence of PEG-I.

## Claims

1. A process for producing a stable vinylidene fluoride polymer latex by emulsion polymerization in the absence of fluorinated surfactant, said process comprising the steps of:
a. providing a hydrophilic poly(ethylene glycol) terminated by a (2-iodopropionate) chain-end (PEG-I),
b. emulsion polymerization of VDF mediated by PEG-I.

2. The process of claim 1, wherein vinylidene fluoride polymer formed in step b includes both homopolymers of vinylidene fluoride and copolymers containing at least 50 mole percent of vinylidene fluoride copolymerized with at least one ethylenically unsaturated monomer chosen from: tetrafluoroethylene, trifluoroethylene, chlorotrifluoroethylene, hexafluoropropene, vinylfluoride, pentafluoropropene, perfluoromethyl vinyl ether, perfluoropropyl vinyl ether, (meth)acrylic acid and (meth)acrylic esters such as alkyl(meth)acrylates, vinyl esters such as vinyl acetate, vinyl propionate, vinyl butyrate, vinyl benzoate, maleic esters such as dimethyl maleate, diethyl maleate, di-propyl maleate, diisopropyl maleate, di-2- methoxyethyl maleate, fumaric esters such as dimethyl fumarate, diethyl fumarate, di-n-propyl fumarate, diisopropyl fumarate, styrene, vinyltoluene, alpha- methylstyrene, acrylonitrile, anhydrides, vinyl esters, alpha-olefins, substituted or unsubstituted mono and dialkyl esters of unsaturated dicarboxylic acids, vinyl aromatics, and cyclic monomers.

3. The process of any of claims 1 or 2, wherein said initiator is a persulfate salt, chosen from sodium persulfate, potassium persulfate, or ammonium persulfate, the amount of persulfate salt added to the reaction mixture, based upon the total weight of monomer added to the reaction mixture, being from 0.005 to 4.0 weight percent.

4. The process of any of claims 1 to 3, wherein said initiator is an organic peroxide chosen from alkyl, dialkyl, or diacyl peroxide, peroxydicarbonates, and peroxy esters used in an amount from about 0.5 to about 2.5 weight percent on total weight of monomer added to the reaction mixture.

5. The process of any of claims 1 to 4, wherein said latex particles of vinylidene fluoride polymer have an average particle size comprised between 20 and 300 nm.

6. The process of any of claims 1 to 5, wherein said latex particles of vinylidene fluoride polymer have a solid content of 1 to 60, preferably of 15 to 45 weight percent.

7. An aqueous dispersion obtainable by the process of claims 1 to 6 comprising particles of vinylidene fluoride polymer, residues of initiator, and a stabilizer from a hydrophilic macroCTA terminated by a (2-iodopropionate)- alone or in combination with at least one other ethylenically unsaturated comonomer.

8. The aqueous dispersion of claim 7, wherein said particles of vinylidene fluoride polymer have an average particle size from 20 to 300 nm, a solid content of 1 to 60 weight percent, and are free of fluorinated surfactant.

9. Membrane comprising the aqueous dispersion of claim 7 or claim 8.

10. Coating comprising the aqueous dispersion of claim 7 or claim 8.

11. Film comprising the aqueous dispersion of claim 7 or claim 8.

12. Cathode binder comprising the aqueous dispersion of claim 7 or claim 8.

13. Conductive polymer comprising the aqueous dispersion of claim 7 or claim 8.
